# EUROPEAN PATENT APPLICATION

(11) **EP 4 394 756 A1**
(43) Date of publication of application: **03.07.2024**
(21) Application number: 21958969.4
(22) Date of filing: 30.09.2021
(51) Int. Cl.: G09G 3/34, G09G 3/36

(54) **DISPLAY CONTROL METHOD AND APPARATUS AND TERMINAL DEVICE**

(71) Applicant: Huawei Technologies Co., Ltd., Shenzhen, Guangdong 518129 (CN)
(72) Inventor: GONG, Xubiao, Shenzhen, Guangdong 518129 (CN)
(74) Representative: Gill Jennings & Every LLP
(86) International application number: PCT/CN2021/122397
(87) International publication number: WO 2023/050399

(57) **Abstract**

This application provides a display method and apparatus, and a terminal device. The method may be applied to a display. The display includes a backlight unit, a panel, and a first control unit. The display has a first display mode and a second display mode. The first display mode is displaying image information by using the backlight unit, the second display mode is displaying the image information by using the backlight unit and the panel, and the method includes: receiving a first status message by the first control unit, where the first status message indicates that the panel does not work; receiving a first image signal, where the first image signal is used to display first image information; and displaying the first image information in the first display mode based on the first status message. Embodiments of this application may be applied to an intelligent vehicle or a new energy vehicle, and help improve security performance of a device, thereby helping improve user experience.

## Description

### TECHNICAL FIELD

This application relates to the field of intelligent driving, and more specifically, to a display control method and apparatus, and a terminal device.

### BACKGROUND

With the development of liquid crystal displays (liquid crystal displays, LCDs), in-vehicle displays are more widely used. As an interactive window of driving information, the in-vehicle display needs to feed back the driving information to a driver in time, so that the driver can be aware of vehicle status in real time. Currently, functional safety of the in-vehicle display is implemented by using a driver board through verification and backup display, and this solution depends on functional normality of the display. When the display is faulty, functional safety of the driver board to the display cannot be guaranteed, so that the driver cannot view the driving information through the display, which affects driving safety.

### SUMMARY

This application provides a display control method and apparatus, and a terminal device, to help improve security performance of a device, thereby helping improve user experience.

According to a first aspect, a display control method is provided. The method may be applied to a display. The display includes a backlight unit, a panel, and a first control unit. The display has a first display mode and a second display mode. The first display mode is displaying image information by using the backlight unit, the second display mode is displaying the image information by using the backlight unit and the panel, and the method includes: receiving a first status message by the first control unit, where the first status message indicates that the panel does not work; receiving a first image signal, where the first image signal is used to display first image information; and displaying the first image information in the first display mode based on the first status message.

In an embodiment of this application, the display may implement a plurality of display modes (for example, the first display mode and the second display mode). In this way, when the panel does not work, the image information may be displayed by using the backlight unit, to implement backup display in an emergency. This helps improve security performance of the device and helps improve user experience.

In some possible implementations, the display control method may be applied to a vehicle. In this application, the "vehicle" may include one or more different types of transportation tools, and may also include one or more different types of transportation tools or movable objects that operate or move on land (for example, a highway, a road, or a railway), water surface (for example, a waterway, a river, or an ocean), or in space. For example, the vehicle may include an automobile, a bicycle, a motorcycle, a train, a subway, an airplane, a boat, an aircraft, a robot, or another type of transportation tool or a movable object, or the like.

In some possible implementations, the first control unit may be a logic board (timing controller, TCON).

In some possible implementations, the backlight unit may be a matrix light-emitting diode (light-emitting diode, LED) backlight unit.

With reference to the first aspect, in some implementations of the first aspect, the first status message includes one or more types of information indicating a panel fault, information indicating a driver chip fault of the display, information indicating a connector fault or a line fault of the display, or information indicating that a battery level is lower than or equal to a preset power level.

In an embodiment of this application, when a fault occurs on the display, the first image information is displayed by using the backlight unit, which helps ensure driving safety. When a battery level of the device is lower than or equal to a preset value, the first image information is displayed by using the backlight unit, so that power consumption of the device can be reduced. For example, the device is a vehicle. A driving mileage of the vehicle can be increased. When a user instruction is received, the first image information is displayed by using the backlight unit, to switch to a display mode that is desired by a user to display the image information. This helps improve user experience.

In some possible implementations, the first image information includes information such as vehicle speed information, steering light information, and gear information.

With reference to the first aspect, in some implementations of the first aspect, before the receiving a first image signal, the method further includes: the first control unit sends the first status message to a second control unit; and the receiving a first image signal includes: receiving the first image signal generated by the second control unit based on the first status message.

In an embodiment of this application, the first control unit may obtain the first image signal generated by the second control unit based on the first status message. For example, when the fault occurs on the display, the second control unit may generate the first image signal based on a controller area network (controller area network, CAN) signal, so that display of some necessary driving information can be ensured when the fault occurs on the display. This helps ensure driving safety.

In some possible implementations, the second control unit may include a microcontroller unit (microcontroller unit, MCU), or the second control unit may include an MCU and an on-screen display (on-screen display, OSD) chip.

With reference to the first aspect, in some implementations of the first aspect, the method further includes: receiving, a second status message by the first control unit, where the second status message indicates that the panel works; receiving a second image signal, where the second image signal is used to display second image information; and switching from the first display mode to the second display mode based on the second status information, and displaying the second image information in the second display mode.

In an embodiment of this application, when the panel works, the display may switch from the first display mode to the second display mode, so that the second image information is displayed by using the backlight unit and the panel. This helps improve visual impression of the user when the user views a picture, and helps improve user experience.

For example, when the display recovers from the fault, or when the battery level of the device is greater than the preset value, or when the user instruction is received, the first control unit may display the second image information by using the backlight unit and the panel. Therefore, the display may switch from displaying the image information by using the backlight unit to displaying the image information by using the backlight unit and the panel that works normally. This helps improve visual impression of the user when the user views the image, and helps improve user experience.

With reference to the first aspect, in some implementations of the first aspect, that the displaying the first image information in the first display mode includes: displaying the first image information by using the backlight unit and a panel in a normally white mode.

In some possible implementations, that the first image information is displayed by using the backlight unit includes: obtaining a first area in the first image information, where the first area is a display area of a colored picture in the first image information, or the first area is a display area of a colorless picture in the first image information; and controlling the backlight unit to display the first image information based on the first area.

In some possible implementations, the first control unit may control a backlight unit that corresponds to the first area to turn on and control a backlight unit that corresponds to a second area to turn off, and the second area is an area other than the first area in the first image information; or the first control unit may control a backlight unit that corresponds to the first area to turn off and control a backlight unit that corresponds to a second area to turn on.

In an embodiment of this application, the backlight unit works with the panel in the normally white mode to display the first image information, so that the display of the image information in the emergency can be ensured. This improves security performance of the device (for example, when the device is the vehicle, driving safety of the vehicle can be improved). This also ensures energy-saving display when the battery level is low, thus helping to reduce power consumption of the device (for example, when the device is the vehicle, the mileage of the vehicle can be increased).

With reference to the first aspect, in some implementations of the first aspect, the first status message includes one or more of the information indicating the panel fault, the information indicating the driver chip fault of the display, the information indicating the connector fault or the line fault of the display, or the information indicating that the battery level is lower than or equal to the preset power level.

With reference to the first aspect, in some implementations of the first aspect, the first status message includes the first user instruction, and the first user instruction indicates to switch to the first display mode.

According to a second aspect, a display control method is provided. The method includes: A second control unit receives a first status message, where the first status message indicates that a panel does not work; and the second control unit sends a first image signal and first indication information to a display based on the first status message. The first image signal is used to display first image information, the first indication information indicates the display to display the first image information in a first display mode, and the first display mode is performing display by using a backlight unit.

In an embodiment of this application, when obtaining the first status message, the second control unit may send the first image signal and the first indication information to the display. In this way, when the panel does not work, the display may display the first image information by using the backlight unit, to implement backup display in an emergency. This helps improve security performance of the device and helps improve user experience.

For example, when a fault occurs on the display, the first image information is displayed by using the backlight unit, which helps ensure driving safety. When a battery level of the device is lower than or equal to a preset value, the first image information is displayed by using the backlight unit, so that power consumption of the device can be reduced. For example, the device is a vehicle. A driving mileage of the vehicle can be increased. When a user instruction is received, the first image information is displayed by using the backlight unit, to switch to a display mode that is desired by a user to display the image information. This helps improve user experience.

With reference to the second aspect, in some implementations of the second aspect, before the sending a first image signal to a display, the method further includes: generating the first image signal based on the first status message.

In an embodiment of this application, the second control unit may generate the first image signal based on the first status message. For example, when the fault occurs on the display, the second control unit may generate the first image signal based on a CAN signal, so that display of some necessary driving information can be ensured when the fault occurs on the display. This helps ensure driving safety.

With reference to the second aspect, in some implementations of the second aspect, the method further includes: receiving a second status message, where the second status message indicates that the panel works; and sending a second image signal and second indication information to the display based on the second status message. The second indication information indicates the display to switch from the first display mode to a second display mode, and the second display mode is displaying the image information by using the backlight unit and the panel.

In an embodiment of this application, when the panel works, the second control unit may indicate the display to switch from the first display mode to the second display mode, so that the second image information is displayed by using the backlight unit and the panel. This helps improve visual impression of the user when the user views a picture, and helps improve user experience.

For example, when the display recovers from the fault, or when the battery level of the device is greater than the preset value, or when the user instruction is received, the second control unit may indicate the display to display the second image information by using the backlight unit and the panel. Therefore, the display may switch from displaying the image information by using the backlight unit to displaying the image information by using the backlight unit and the panel that works normally. This helps improve visual impression of the user when the user views the image, and helps improve user experience.

With reference to the second aspect, in some implementations of the second aspect, the first status message includes one or more types of information indicating a panel fault, information indicating a driver chip fault of the display, information indicating a connector fault or a line fault of the display, or information indicating that a battery level is lower than or equal to a preset power level.

With reference to the second aspect, in some implementations of the second aspect, the first status message includes a first user instruction, and the first user instruction indicates to switch to the first display mode.

According to a third aspect, a display control apparatus is provided. A first display mode and a second display mode are implemented by using the apparatus. The first display mode is performing display by using a backlight unit, and the second display mode is displaying the image information by using the backlight unit and a panel. The apparatus includes: a receiving unit, configured to receive a first status message, where the first status message indicates that the panel does not work, and the receiving unit is further configured to receive a first image signal, where the first image signal is used to display first image information; and a control unit, configured to display the first image information in the first display mode based on the first status message.

With reference to the third aspect, in some implementations of the third aspect, the apparatus further includes: a sending unit, configured to send the first status message to a second control unit before the first image signal is received by the receiving unit; and the receiving unit is specifically configured to: receive the first image signal generated by the second control unit based on the first status message.

With reference to the third aspect, in some implementations of the third aspect, the receiving unit is further configured to receive a second status message, where the second status message indicates that the panel works. The receiving unit is further configured to receive a second image signal, where the second image signal is used to display second image information. The first control unit is further configured to switch from the first display mode to the second display mode based on the second status information, and display the second image information in the second display mode.

With reference to the third aspect, in some implementations of the third aspect, the first status message includes one or more types of information indicating a panel fault, information indicating a driver chip fault of the display, information indicating a connector fault or a line fault of the display, or information indicating that a battery level is lower than or equal to a preset power level.

With reference to the third aspect, in some implementations of the third aspect, the first status message includes a first user instruction, and the first user instruction indicates to switch to the first display mode.

With reference to the third aspect, in some implementations of the third aspect, the first image information includes one or more types of vehicle speed information, gear information, or steering light information.

According to a fourth aspect, a display control apparatus is provided. The apparatus includes: a receiving unit, configured to receive a first status message, where the first status message indicates that a panel does not work; and a sending unit, configured to send a first image signal and first indication information to a display based on the first status message. The first image signal is used to display first image information, the first indication information indicates the display to display the first image information in a first display mode, and the first display mode is performing display by using a backlight unit.

With reference to the fourth aspect, in some implementations of the fourth aspect, the apparatus further includes: a generation unit, configured to: generate the first image signal based on the first status message before the sending unit sends the first image signal information to the display.

With reference to the fourth aspect, in some implementations of the fourth aspect, the receiving unit is further configured to receive a second status message, where the second status message indicates that the panel works. The sending unit is further configured to send a second image signal and second indication information to the display based on the second status message. The second indication information indicates the display to switch from the first display mode to a second display mode, and the second display mode is displaying the image information by using the backlight unit and the panel.

With reference to the fourth aspect, in some implementations of the fourth aspect, the first status message includes one or more types of information indicating a panel fault, information indicating a driver chip fault of the display, information indicating a connector fault or a line fault of the display, or information indicating that a battery level is lower than or equal to a preset power level.

With reference to the fourth aspect, in some implementations of the fourth aspect, the first status message includes a first user instruction, and the first user instruction indicates to switch to the first display mode.

According to a fifth aspect, an apparatus is provided. The apparatus includes a processing unit and a storage unit. The storage unit is configured to store instructions, and the processing unit executes the instructions stored in the storage unit, so that the apparatus is enabled to perform any possible method in the first aspect or the second aspect.

Optionally, the processing unit may be a processor, and the storage unit may be a memory. The memory may be a storage unit (for example, a register or a cache) in a chip, or may be a storage unit (for example, a read-only memory or a random access memory) located outside a chip in a vehicle.

According to a sixth aspect, a display is provided. The display includes a backlight unit, a panel, and a first control unit. A first display mode and a second display mode are implemented by using the first control unit. The first display mode is displaying image information by using the backlight unit, and the second display mode is displaying the image information by using the backlight unit and the panel.

According to a seventh aspect, a terminal device is provided, including the apparatus according to any possible implementations of the third aspect, the fourth aspect, and the fifth aspect, or including the display according to the sixth aspect.

With reference to the seventh aspect, in some implementations of the seventh aspect, the terminal device is a vehicle.

According to an eighth aspect, a computer program product is provided. The computer program product includes computer program code, and when the computer program code is run on a computer, the computer is enabled to perform the method in the first aspect or the second aspect.

It should be noted that all or some of the computer program code may be stored in a first storage medium. The first storage medium may be encapsulated together with a processor, or may be encapsulated separately from a processor. This is not specifically limited in embodiments of this application.

According to a ninth aspect, a computer-readable medium is provided. The computer-readable medium stores program code. When the computer program code is run on a computer, the computer is enabled to perform the method in the foregoing first aspect or second aspect.

According to a tenth aspect, an embodiment of this application provides a chip system. The chip system includes a processor, configured to invoke a computer program or computer instructions stored in a memory, so that the processor is enabled to perform the method in the first aspect.

With reference to the tenth aspect, in a possible implementation, the processor is coupled to the memory by using an interface.

With reference to the tenth aspect, in a possible implementation, the chip system further includes the memory, and the memory stores the computer program or the computer instructions.

According to an eleventh aspect, an embodiment of this application provides a chip system. The chip system includes a processor, configured to invoke a computer program or computer instructions stored in a memory, so that the processor is enabled to perform the method in the second aspect.

With reference to the eleventh aspect, in a possible implementation, the processor is coupled to the memory by using an interface.

With reference to the eleventh aspect, in a possible implementation, the chip system further includes the memory, and the memory stores the computer program or the computer instructions.

### BRIEF DESCRIPTION OF DRAWINGS

FIG. 1 is a functional block diagram of a terminal device according to an embodiment of this application;
FIG. 2 is a schematic diagram of an in-vehicle display;
FIG. 3 is an exploded view of a system of any in-vehicle display;
FIG. 4 is a schematic diagram of a remote driver board;
FIG. 5 is a schematic diagram of a display module;
FIG. 6 is a schematic diagram of a structure of a display;
FIG. 7 is a schematic diagram of an edge-lit architecture;
FIG. 8 is a schematic diagram of a direct-lit architecture;
FIG. 9 is a schematic diagram of a liquid crystal display in a normally white mode;
FIG. 10 is a schematic diagram of a liquid crystal display in a normally black mode;
FIG. 11 is a schematic diagram of a structure of an in-vehicle display system;
FIG. 12 is a schematic diagram of another structure of an in-vehicle display system;
FIG. 13 is a schematic diagram of a structure of a display system according to an embodiment of this application;
FIG. 14 is a display effect diagram of driving information according to an embodiment of this application;
FIG. 15 is another display effect diagram of driving information according to an embodiment of this application;
FIG. 16 is a schematic diagram of a structure of another display system according to an embodiment of this application;
FIG. 17 is another display effect diagram according to an embodiment of this application;
FIG. 18 is a schematic flowchart of a display control method according to an embodiment of this application;
FIG. 19 is another schematic flowchart of a display control method according to an embodiment of this application;
FIG. 20 is a schematic block diagram of a display control apparatus according to an embodiment of this application;
FIG. 21 is a schematic block diagram of a display control apparatus according to an embodiment of this application; and
FIG. 22 is a schematic block diagram of a display system according to an embodiment of this application.

### DESCRIPTION OF EMBODIMENTS

The following describes the technical solutions in this application with reference to the accompanying drawings.

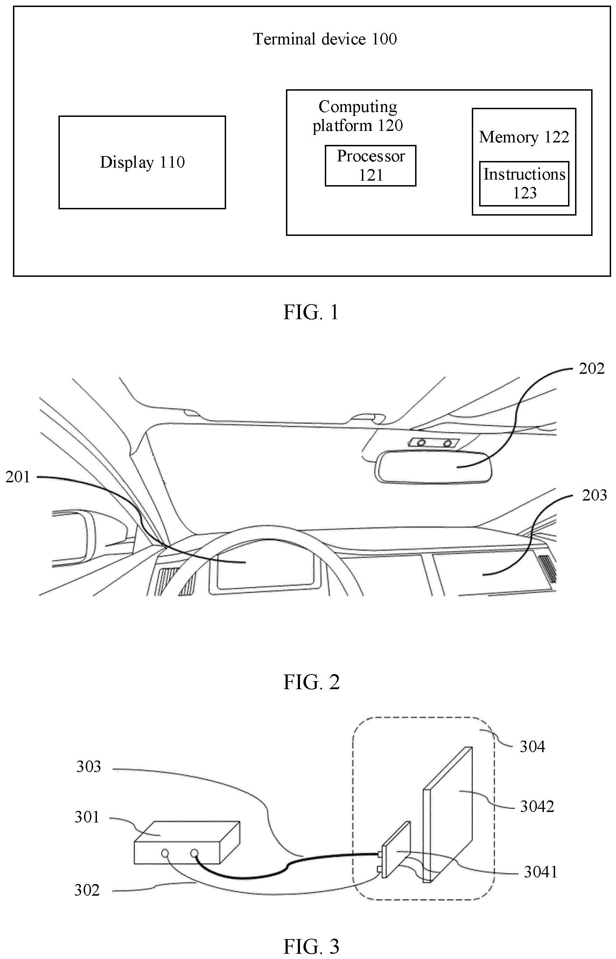

FIG. 1 is a functional block diagram of a terminal device 100 according to an embodiment of this application. The terminal device 100 may include a display 110 and a computing platform 120.

The display 110 is configured to display an image, a video, and the like. The display 110 includes a backlight unit and a display panel. The backlight unit may be a mini light-emitting diode (mini light-emitting diode, mini-LED) or a micro-LED. The display panel may be an LCD, a mini-LED, a micro-OLED, or the like. In some embodiments, the terminal device 100 may include one or N displays 110, where N is a positive integer greater than 1.

Some or all functions of the terminal device 100 are controlled by the computing platform 120. The computing platform 120 may include at least one processor 121, and the processor 121 may execute instructions 123 stored in a non-transient computer-readable medium like a memory 122. In some embodiments, the computing platform 120 may alternatively be a plurality of computing devices that control individual components or subsystems of the terminal device 100 in a distributed manner.

The processor 121 may be any conventional processor, for example, a central processing unit (central processing unit, CPU). Alternatively, the processor 121 may further include a graphics processing unit (graphics processing unit, GPU), a field programmable gate array (field programmable gate array, FPGA), a system on chip (system on chip, SOC), an application-specific integrated circuit (application-specific integrated circuit, ASIC) or a combination thereof.

It should be understood that the terminal device 100 in this embodiment of this application may be a vehicle, a mobile phone, a smart television, a tablet computer, a wearable device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. A specific type of the terminal device is not limited in embodiments of this application.

It should be further understood that, in this application, the "vehicle" may include one or more different types of transportation tools, and may also include one or more different types of transportation tools or movable objects that operate or move on land (for example, a highway, a road, or a railway), water surface (for example, a waterway, a river, or an ocean), or in space. For example, the vehicle may include an automobile, a bicycle, a motorcycle, a train, a subway, an airplane, a boat, an aircraft, a robot, or another type of transportation tool or a movable object, or the like.

It should be further understood that a structure of the terminal device in FIG. 1 should not be construed as a limitation on embodiments of this application.

As mentioned above, as an interactive window of driving information, an in-vehicle display needs to feed back the driving information to a driver in time, so that the driver can be aware of vehicle status in real time. Currently, functional safety of the in-vehicle display is implemented by using a driver board through verification and backup display, and this solution depends on functional normality of the display. When the display is faulty, functional safety of the driver board to the display cannot be guaranteed, so that the driver cannot view the driving information through the display, which affects driving safety.

Embodiments of this application provide a display method and apparatus, and a terminal device. When a fault occurs on a display, image information can be displayed by using a light-emitting diode (light-emitting diode, LED) backlight, to help improve user experience. For example, when a fault occurs on an in-vehicle display, a matrix LED backlight works with a panel that is in a normally white mode to display a vehicle speed, steering information, gear information, and the like. This helps improve driving safety. Alternatively, when a battery level of the terminal device is low, a matrix LED backlight works with a panel that is in a normally white mode to display information. This helps save battery of the terminal device. For example, when a battery level of the vehicle is lower than a specific threshold, the matrix LED backlight works with the panel that is in the normally white mode to display the vehicle speed, the steering information, the gear information, and the like. This helps save battery of the vehicle, and helps increase a driving mileage of the vehicle.

The following describes the display method in embodiments of this application by using the in-vehicle display as an example. FIG. 2 is a schematic diagram of an in-vehicle display. As shown in FIG. 2, the in-vehicle display may include a vehicle instrument display 201, a vehicle streaming media rearview mirror 202, and an in-vehicle infotainment display 203. The vehicle instrument display 201 is configured to display driving information of a vehicle, and is mainly used by a driver. The vehicle streaming media rearview mirror 202 is mainly configured to display information about the interior of a vehicle cabin and information about a next vehicle, and assists the driver in driving. The in-vehicle infotainment display 203 mainly controls human-machine interaction of the entire vehicle, such as air conditioning, seat control, music, navigation, and video entertainment.

FIG. 3 is an exploded view of a system of any in-vehicle display in FIG. 2. As shown in FIG. 3, the system may include an in-vehicle display system host 301, a controller area network (controller area network, CAN) bus 302, a low-voltage differential signaling (low-voltage differential signaling, LVDS) signal cable 303, and a remote display system 304. The remote display system 304 includes a remote driver board 3041 and a display module 3042. The in-vehicle display system host 301 may provide a source end signal for content displayed on the display. The CAN bus can provide the driving information of the vehicle, such as the driving speed information, the steering light information, and the gear information. The LVDS signal cable is used to transmit the content displayed on the display. The signal is a high-speed signal that matches different serial chips and can be transmitted by using different protocols. A main function of the remote driver board is to de-serialize a source end transmission signal, and convert the signal into an LVDS signal required by the display module, for example, an open low-voltage differential signaling display interface (open low-voltage differential signaling display interface, Open LDI) signal or an embedded display port (embedded display port, eDP) signal. In addition, the remote driver board receives a CAN signal and matches a safety chip to perform secure display of driving status information and power conversion.

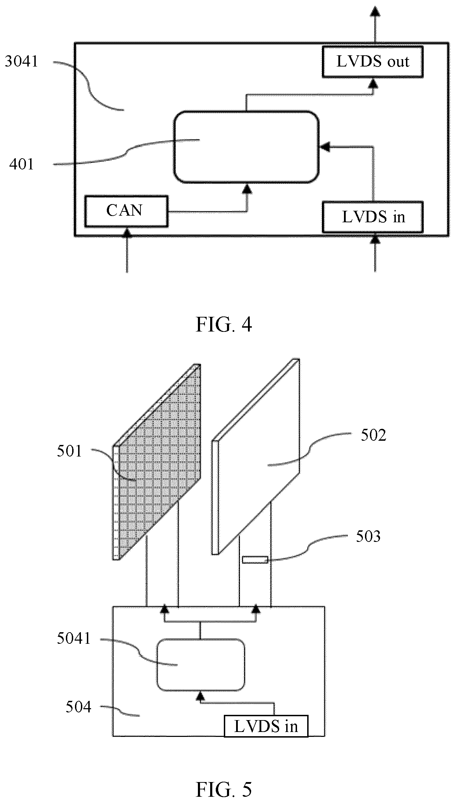

FIG. 4 is a schematic diagram of a structure of a remote driver board. The remote driver board 3041 may include a security chip 401. The security chip 401 may be a microcontroller unit (microcontroller unit, MCU) of the remote driver board, and may implement signal de-serialization, CAN signal receiving, secure display, and the like. In some scenarios, the chip is implemented by a plurality of groups of chips through combination. In an embodiment, the security chip 401 may include the MCU and an on-screen display (on-screen display, OSD) chip.

FIG. 5 is a schematic diagram of a structure of a display module. The display module may include a backlight unit 501, a panel (panel) 502, a chip-on-flex (chip-on-flex, COF), a display driver integrated circuit (display driver integrated circuit, DDIC) and flexible printed circuit (flexible printed circuit, FPC) 503, a logic board (timing controller, TCON) 504, and the like. The TCON 504 is configured to receive an LVDS signal, and implement cooperative display of the backlight unit 501 and the panel 502 through algorithm control (for example, a local dimming (local dimming) algorithm). In addition, the TCON 504 may be further configured to perform power conversion.

In an embodiment, a function of the TCON 504 may be implemented by a TCON chip 5041.

The backlight unit 501 may be a matrix backlight unit. The backlight unit 501 performs matrix layout by using mini-LEDs, and may implement partition control (for example, an LED backlight is turned on in partitions). For example, the TCON board may implement the local dimming algorithm for displayed content, to improve readability of the displayed content.

The panel 502 is configured to display the displayed content. The panel may adopt a combination of polarizers that are in a normally white mode, to implement image display with liquid crystal control. A material of the component may be a glass substrate.

The DDIC and FPC 503 is configured to convert a digital signal into an analog signal, and drive a circuit on the panel to control rotation of liquid crystals, to implement image display. For example, a product form of the DDIC and FPC may be the COF, or may be a combination of the chip-on-glass (chip-on-glass, COG) and the FPC.

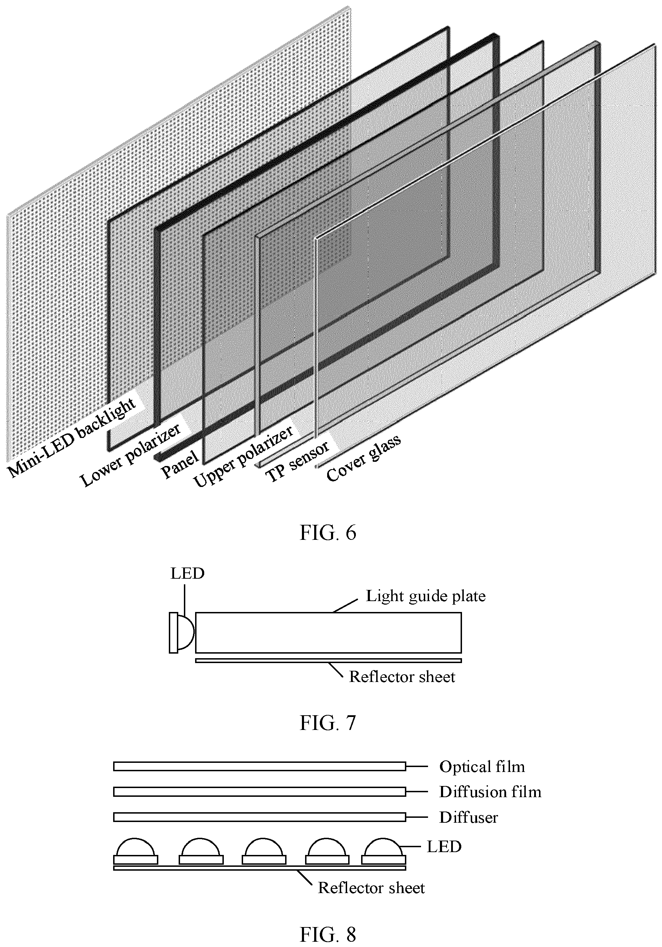

FIG. 6 is a schematic diagram of another structure of a display module. As shown in FIG. 6, the display module may include a mini-LED backlight (mini-LED backlight), a lower polarizer, a panel (panel), an upper polarizer, a touch sensor (TP sensor), and cover glass (cover glass).

An LED backlight source used by a current LCD includes an edge-lit backlight source and a direct-lit backlight source. FIG. 7 is a schematic diagram of an edge-lit architecture. The LED is disposed on a side of a light guide plate. The edge-lit backlight source is a backlight source formed by a linear light source or a point light source on a side of a specially designed light guide plate. The edge-lit backlight source implements effect of a surface light source through the light guide plate, and is visually fully open or fully closed.

FIG. 8 is a schematic diagram of a direct-lit architecture. An edge-lit backlight source does not need a light guide plate, but a light source (LED chip array) is placed at the bottom of a backlight source. After a light ray is emitted from an LED, the light ray passes through a reflector at the bottom, and then passes through a diffuser and a diffusion film on a surface to be evenly emitted. Thickness of the backlight source is mainly determined by a height of a cavity between the reflector and the diffusion film. When installation requirements and luminous brightness are met, a high cavity brings good uniformity of the light rays emitted through the diffuser. The direct-lit backlight source may use a solution of mini-LEDs, so that the direct-lit backlight source is visually in matrix and local dimming is performed to match display effect of an LCD.

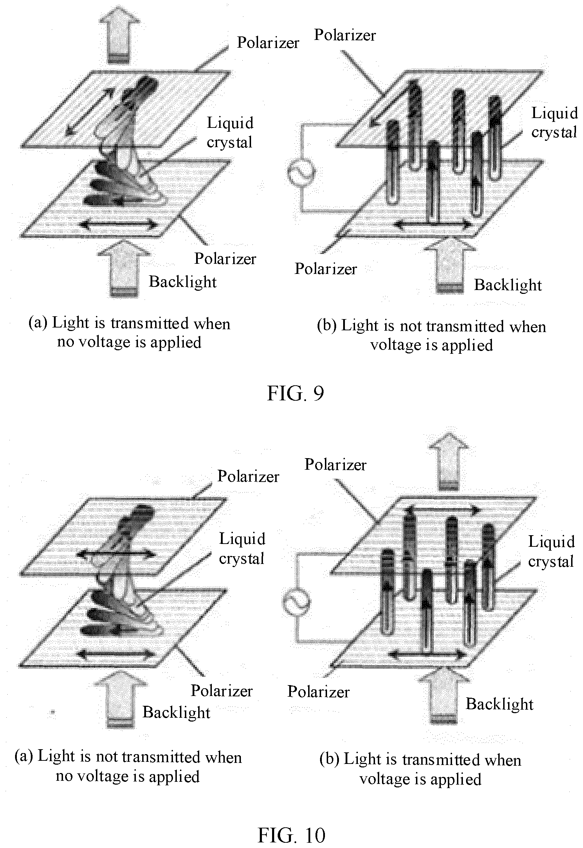

A display mode of a panel may be classified into an NW mode and a normally black (normally black, NB) mode. FIG. 9 is a schematic diagram of a liquid crystal display in an NW mode. As shown in FIG. 9, when no voltage is applied, liquid crystals transmit light and a bright picture is displayed. When voltage is applied, the liquid crystals do not transmit light and a dark picture is displayed.

FIG. 10 is a schematic diagram of a liquid crystal display in an NB mode. As shown in FIG. 10, when no voltage is applied, liquid crystals do not transmit light and a dark picture is displayed. When voltage is applied, the liquid crystals transmit light and a bright picture is displayed.

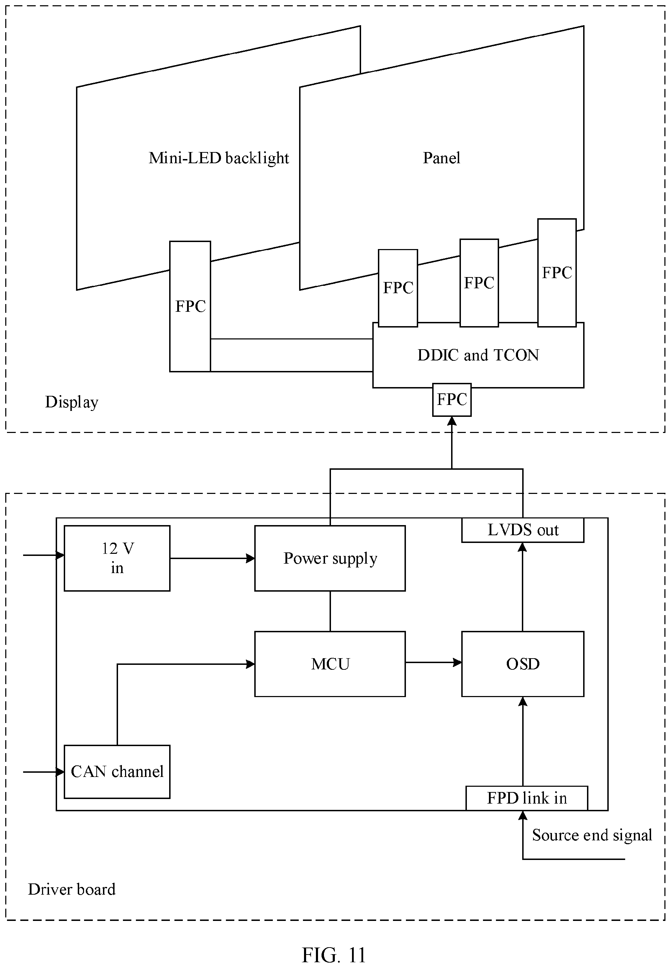

FIG. 11 is a schematic diagram of a structure of an in-vehicle display system. As shown in FIG. 11, the in-vehicle display system may include a driver board and a display. The driver board includes a power supply, an MCU, and an OSD chip. The OSD chip may receive a source end signal (for example, the source end signal may be an LVDS signal), and perform data check on the source end signal, to determine whether the source end signal is normal. When the source end signal is abnormal, the OSD chip enters a function security processing logic. If the OSD chip determines that the source end signal is normal, the OSD chip may convert the source end signal into a signal that can be received and recognized by the display.

For example, the OSD chip may receive the source end signal by using a video serial communication (flat panel display link, FPD Link) protocol, may receive the source end signal by using an automotive pixel link (automotive pixel link, APIX) protocol, or may receive the source end signal by using a gigabit multimedia serial link (Gigabit multimedia serial links, GMSL) protocol.

For example, the OSD chip may convert the source end signal into an Open LDI signal or an eDP signal.

The driver board may also receive a CAN signal and send the signal to the OSD chip by using the MCU. The CAN signal may include information such as a vehicle status (for example, a vehicle speed, a steering light, or a gear) of the vehicle. When the OSD chip enters the function security processing logic, the OSD chip may determine image information based on the CAN signal, to send the image information to the display by using an LVDS interface for display.

After receiving the image information by using a flexible printed circuit, the display controls a mini-LED backlight and a panel to perform display by using a DDIC and TCON.

As shown in FIG. 11, the driver board may further supply power to the DDIC and TCON.

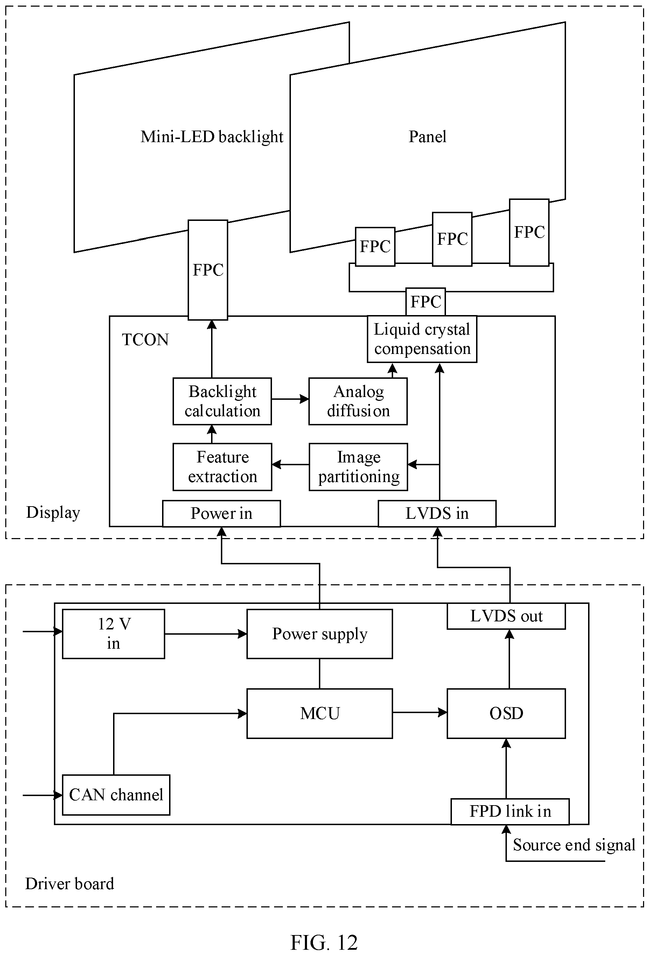

FIG. 12 is a schematic diagram of another structure of an in-vehicle display system. When a TCON controls a mini-LED backlight and a panel to perform display, the display may be implemented by using a local dimming (local dimming) algorithm. After a display receives image information sent by a driver board by using an LVDS interface, the TCON may adjust a matrix backlight through, for example, image partitioning, feature extraction, backlight calculation, analog diffusion, and liquid crystal compensation. In this way, an LED that corresponds to a colorless picture is turned off to achieve pure black effect, and an LED that corresponds to a colored part is turned-on to improve visual effect.

For example, the TCON may first partition, by performing image partitioning, the image information sent by the driver board to the display, for example, partition the image information into four pieces of image information of equal sizes. The TCON performs feature extraction on each piece of image information, to obtain image information that corresponds to the colorless picture and image information that corresponds to the colored part in each piece of image information. The TCON calculates backlight brightness suitable for the image information based on the image information after feature extraction. The analog diffusion and the liquid crystal compensation indicate that after backlight calculation is performed on the image, to ensure that display brightness of the image during actual display remains consistent as much as possible with display brightness of the image when the backlight is fully turned on, a pixel size of the displayed image needs to be adjusted to change light transmittance. The TCON may adjust each pixel point by point based on a compensation curve.

Both the in-vehicle display systems shown in FIG. 11 and FIG. 12 depend on a fact that the display can work normally, to implement functional safety from the source end to the driver board. When the display module is faulty and cannot display, functional safety of the driver board to the display cannot be guaranteed. A fault case of the display includes but is not limited to the following:
(1) An LCD panel is damaged, causing no display or erratic display.
(2) A DDIC or a TCON of an LCD is faulty, causing no display or erratic display.
(3) Cables such as a high-speed signal cable or a connection cable in an FPC are damaged, causing no display or erratic display.

In embodiments of this application, emergency backup display when a fault occurs on a display may be implemented based on the foregoing local dimming algorithm and the panel in the NW mode.

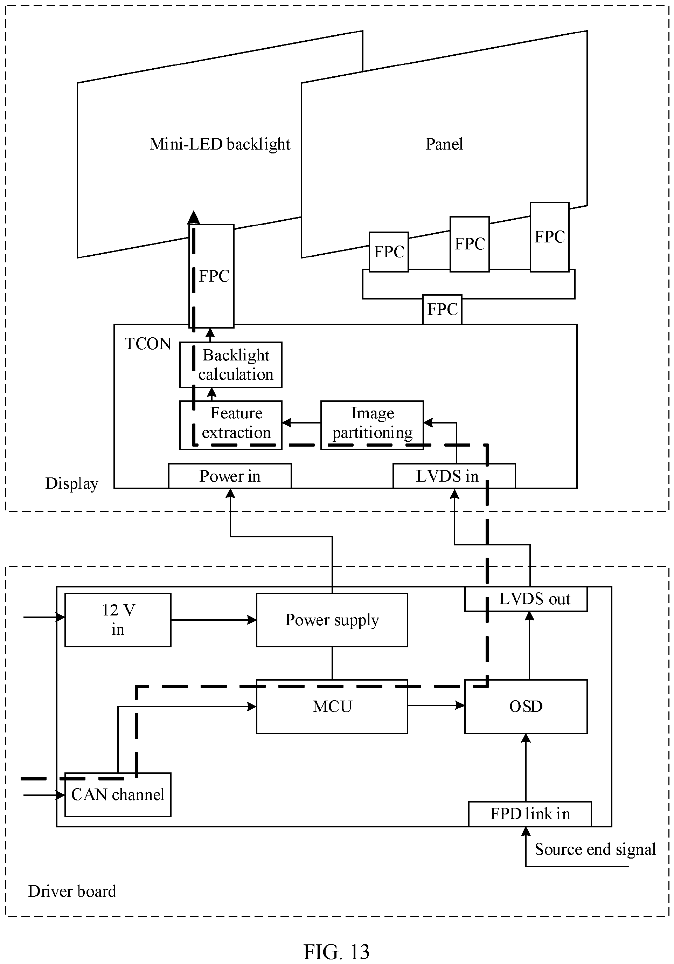

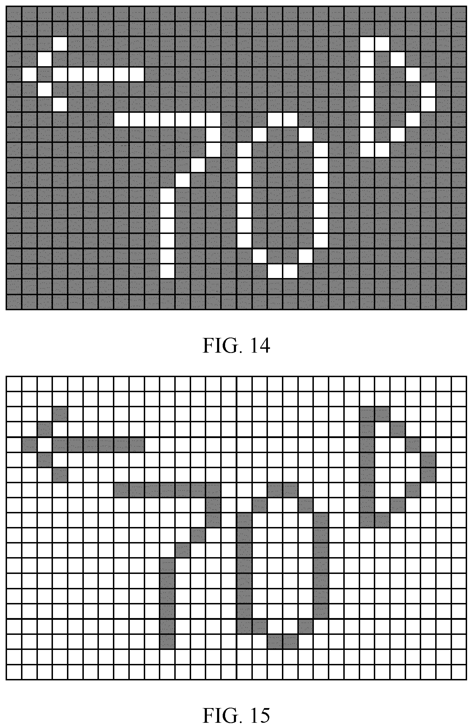

FIG. 13 is a schematic diagram of a structure of a display system according to an embodiment of this application. As shown in FIG. 13, after receiving a CAN signal including driving information, an MCU sends the CAN signal to an OSD chip. The OSD chip may determine an image signal based on the driving information included in the CAN signal. The OSD chip sends the image signal to a display by using an LVDS interface. After receiving the image signal, the display may determine, by performing image partitioning and feature extraction, a colorless picture and a colored picture in image information that corresponds to the image signal, turn on an LED backlight area that corresponds to the colored picture, and turn off an LED backlight area that corresponds to the colorless picture. An LED backlight works with a panel that is in an NW mode for matrix display. FIG. 14 is a display effect diagram of driving information according to an embodiment of this application, including a vehicle speed (for example, 70 km/h), a steering light (for example, a left turn), and a gear (for example, a D gear) for example.

In an embodiment, after receiving the image signal, the display may determine, by performing image partitioning and feature extraction, the colorless picture and the colored picture in the image information that corresponds to the image signal, turn on the LED backlight area that corresponds to the colorless picture, and turn off the LED backlight area that corresponds to the colored picture. The LED backlight works with the panel in the NW mode for matrix display. FIG. 15 is another display effect diagram of the driving information according to an embodiment of this application, including the vehicle speed (for example, 70 km/h), the steering light (for example, the left turn), and the gear (for example, the D gear) for example.

In an embodiment, the display system shown in FIG. 13 may be used for backup display when the fault occurs on the display, or may be used for energy-saving display when the battery level of the terminal device is lower than a preset value. For example, when a new energy vehicle has insufficient power (for example, with a battery level of less than 10%), a demand for power saving is high. In this case, displaying by using the display system shown in FIG. 13 may save power of the new energy vehicle. This helps increase a driving mileage of the vehicle. For example, power consumption of about 1155 mW can be saved when the panel is turned off.

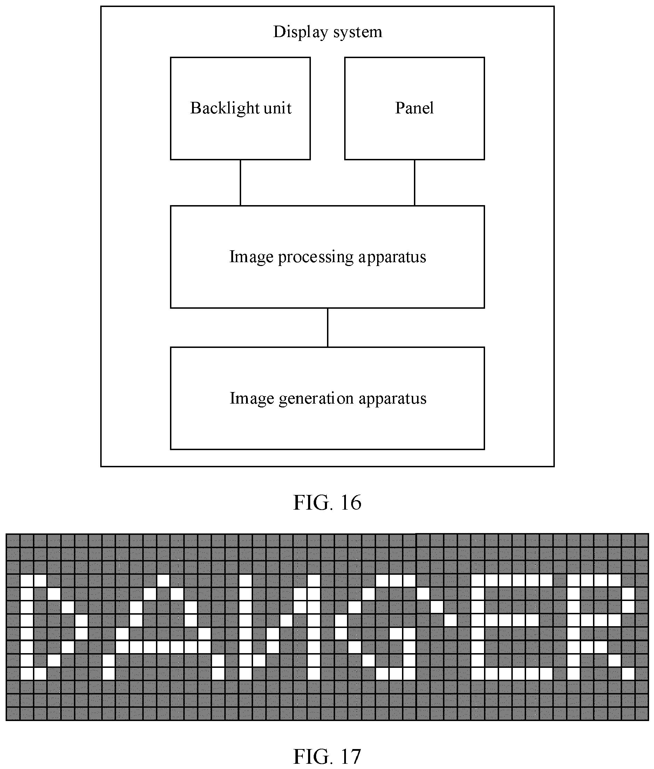

FIG. 16 is a schematic diagram of a structure of another display system according to an embodiment of this application. As shown in FIG. 16, the display system includes an image generation apparatus, an image processing apparatus, a backlight unit (for example, an LED backlight), and a panel. The image generation apparatus is configured to generate an image signal. The image processing apparatus is configured to perform feature extraction on image information that corresponds to the image signal to obtain a first target area in the image information. The first target area may be an area used to display a colored picture. An area other than the first target area in the image information may be an area used to display a colorless picture. The image processing apparatus may turn on an LED backlight based on the first target area, and perform matrix display by using the LED backlight working with the panel in an NW mode. For example, the image processing apparatus may turn on a backlight unit that corresponds to the first target area, and turn off an LED backlight of an area other than the first target area. For example, the image processing apparatus may turn on the LED backlight that corresponds to an area other than the first target area, and turn off an LED backlight of an area other than the first target area.

In an embodiment, the image generation module and the image processing module may be two different modules, or may be different submodules integrated into a same module. This is not limited in embodiments of this application.

It should be understood that the foregoing embodiments are described by using an example in which the display system is applied to the vehicle. This is not limited in embodiments of this application. The display method and system in embodiments of this application may be further applied to a terminal device like a mobile phone or a smart television. For example, FIG. 17 is another display effect diagram according to an embodiment of this application. Application to a smart television is taken as an example. When the smart television detects a crash from another object, causing a panel to be damaged, and the panel cannot perform display, the smart television may prompt, by displaying preset image information (for example, "DANGER"), a user that the current smart television is in danger.

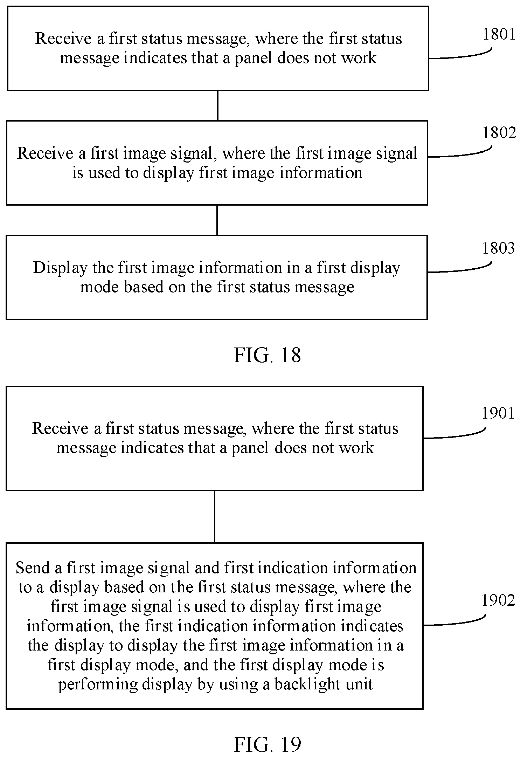

FIG. 18 is a schematic flowchart of a display control method 1800 according to an embodiment of this application. As shown in FIG. 18, the method 1800 may be applied to a display. The display includes a backlight unit, a panel, and a first control unit. The display has a first display mode and a second display mode. The first display mode is displaying image information by using the backlight unit, the second display mode is displaying image information by using the backlight unit and the panel, and the method 1800 includes the following steps.

S 1801: The display receives a first status message, where the first status message indicates that the panel does not work.

Optionally, that the display receives a first status message includes: The first control unit receives the first status message.

Optionally, the first status message includes one or more types of information indicating a panel fault, information indicating a driver chip fault of the display, information indicating a connector fault or a line fault of the display, or information indicating that a battery level is lower than or equal to a preset power level.

Optionally, the first status message includes a first user instruction, and the first user instruction indicates to switch to the first display mode.

For example, when a fault occurs on the display, the first control unit may directly obtain the first status message indicating that the display is faulty.

For example, the first control unit may obtain the first status message from a second control unit. For example, when a battery level of a vehicle is lower than or equal to a preset value, the second control unit may indicate the first control unit that the battery level is lower than or equal to the preset value, so that the first control unit may control the panel not to work. For another example, the first status message may be a first user instruction, and the first user instruction indicates to switch to the first display mode.

For example, the first control unit may be a TCON, and the second control unit may be an MCU (or an MCU and OSD chip).

In this embodiment of this application, a function of an OSD chip may be integrated into the MCU, or the OSD chip may be a chip independent of the MCU. This is not limited in embodiments of this application.

S1802: The display receives a first image signal.

Optionally, that the display receives a first image signal includes: The first control unit receives the first image signal.

For example, the first control unit may receive the first image signal sent by the second control unit.

Optionally, the first image signal may alternatively be a preset image signal.

S1803. The display displays the first image information in the first display mode based on the first status message.

Optionally, before that the display receives a first image signal, the method further includes: The display sends the first status message to the second control unit; and that the display receives a first image signal includes: The display receives the first image signal generated by the second control unit based on the first status message.

For example, the TCON may obtain the first status message indicating that the panel does not work. After obtaining the first status message, the TCON may send the first status message to an MCU on a remote driver board. After receiving the signal, the MCU may generate the first image signal based on the first status message, and send the first image signal to the TCON. For example, when the fault occurs on the display, the MCU may generate the first image signal based on a CAN signal, so that display of some necessary driving information can be ensured when the fault occurs on the display. This helps ensure driving safety.

Optionally, the method further includes: The display receives a second status message, where the second status message indicates that the panel works; the display receives a second image signal, where the second image signal is used to display second image information; and the display switches from the first display mode to the second display mode based on the second status information, and displays the second image information in the second display mode.

Optionally, that the first image information is displayed by using the backlight unit includes: The display obtains a first area in the first image information, where the first area is a display area of a colorful picture in the first image information, or the first area is a display area of a colorless picture in the first image information; and the display controls the backlight unit to display the first image information based on the first area.

It should be understood that for a process in which the display displays the first image information by using the backlight unit, refer to the display process shown in FIG. 13. Details are not described herein again.

Optionally, the method further includes: receiving the second status message by the first control unit, where the second status message indicates that the panel works; receiving the second image signal, where the second image signal is used to display second image information; and switching from the first display mode to the second display mode based on the second status information, and displaying the second image information in the second display mode.

In this embodiment of this application, when the panel works, the display may switch from the first display mode to the second display mode, so that the second image information is displayed by using the backlight unit and the panel. This helps improve visual impression of the user when the user views a picture, and helps improve user experience.

For example, when the display recovers from the fault, or when the battery level of the device is greater than the preset value, or when the user instruction is received, the first control unit may display the second image information by using the backlight unit and the panel. Therefore, the display may switch from displaying the image information by using the backlight unit to displaying the image information by using the backlight unit and the panel that works normally. This helps improve visual impression of the user when the user views the image, and helps improve user experience.

It should be understood that for a process in which the display displays the second image information by using the backlight unit and the display panel, refer to the display process shown in FIG. 12. Details are not described herein again.

Optionally, the first image information includes one or more types of vehicle speed information, gear information, or steering light information.

In this embodiment of this application, the display may implement a plurality of display modes (for example, the first display mode and the second display mode). In this way, when the panel does not work, the image information may be displayed by using the backlight unit, to implement backup display in an emergency. This helps improve security performance of the device and helps improve user experience.

FIG. 19 is a schematic flowchart of a display control method 1900 according to an embodiment of this application. As shown in FIG. 19, the method 1900 may be applied to a second control unit, and the second control unit may be the foregoing MCU (or, the second control unit may be a control unit that integrates functions of the MCU and functions of the OSD chip). The method 1900 includes the following steps.

S1901: The second control unit receives a first status message, where the first status message indicates that a panel does not work.

Optionally, the first status message includes one or more types of information indicating a panel fault, information indicating a driver chip fault of the display, information indicating a connector fault or a line fault of the display, or information indicating that a battery level is lower than or equal to a preset power level.

Optionally, the first status message includes a first user instruction, and the first user instruction indicates to switch to the first display mode.

For example, when a battery level of a vehicle is lower than or equal to a preset value, the second control unit may obtain the first status message. Alternatively, when the vehicle receives the first user instruction, the second control unit may determine that the panel does not work.

For example, the second control unit may obtain the first status message from a first control unit. For example, when a fault occurs on the display, the first control unit may obtain the first status message, and may send the first status message to the second control unit.

It should be understood that, after obtaining the first status message, the first control unit may also send, to the second control unit, other indication information indicating that the panel does not work.

S 1902: The second control unit sends a first image signal and first indication information to the display based on the first status message. The first image signal is used to display first image information, the first indication information indicates the display to display the first image information in a first display mode, and the first display mode is performing display by using a backlight unit.

Optionally, the method further includes: before that the second control unit sends a first image signal to the display, the method further includes: The second control unit generates the first image signal based on the first status message.

Optionally, the method further includes: The second control unit receives a second status message, where the second status message indicates that the panel works; and the second control unit sends a second image signal and second indication information to the display based on the second status message. The second indication information indicates the display to switch from the first display mode to a second display mode, and the second display mode is displaying the image information by using the backlight unit and the panel.

For example, when the battery level of a vehicle is greater than the preset value, the second control unit may obtain the second status message. Alternatively, when the vehicle receives a second user instruction, the second control unit may determine that the panel does not work.

For example, the second control unit may obtain the second status message from the first control unit. For example, when the display recovers from the fault, the first control unit may obtain the first status message, and may send the second status message to the second control unit.

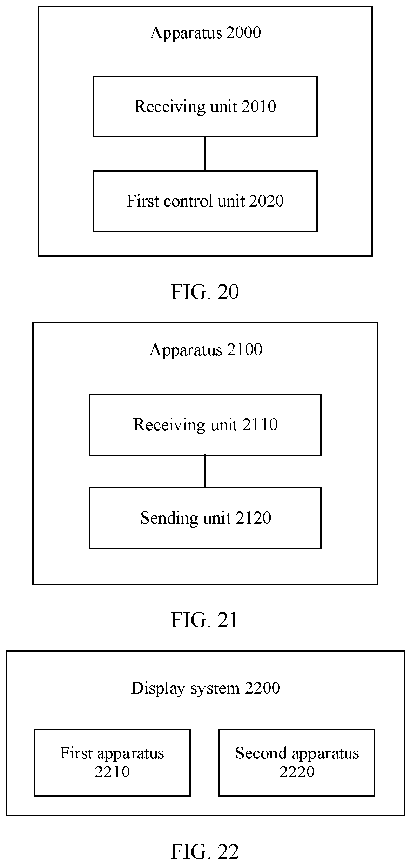

FIG. 20 is a schematic block diagram of a display control apparatus 2000 according to an embodiment of this application. As shown in FIG. 20, the display control apparatus 2000 includes:
a receiving unit 2010, configured to receive a first status message, where the first status message indicates that a panel does not work, and
the receiving unit 2010 is further configured to receive a first image signal, where the first image signal is used to display first image information; and
a first control unit 2020, configured to display the first image information in a first display mode based on the first status message.

Optionally, the apparatus 2000 further includes:
a sending unit, configured to send the first status message to a second control unit before the receiving unit receives the first image signal.

The receiving unit 2010 is specifically configured to receive the first image signal generated by the second control unit based on the first status message.

Optionally, the receiving unit 2010 is further configured to receive a second status message, where the second status message indicates that the panel works.

The receiving unit 2010 is further configured to receive a second image signal, where the second image signal is used to display second image information.

The first control unit 2020 is further configured to switch from the first display mode to the second display mode based on the second status information, and display the second image information in the second display mode.

Optionally, the first status message includes one or more types of information indicating a panel fault, information indicating a driver chip fault of the display, information indicating a connector fault or a line fault of the display, or information indicating that a battery level is lower than or equal to a preset power level.

Optionally, the first status message includes a first user instruction, and the first user instruction indicates to switch to the first display mode.

Optionally, the first image information includes one or more types of vehicle speed information, gear information, or steering light information.

Optionally, the first control unit may be a TCON.

Optionally, the apparatus 2000 may be included in the display.

FIG. 21 is a schematic block diagram of a display control apparatus 2100 according to an embodiment of this application. As shown in FIG. 21, the display control apparatus 2100 includes:
a receiving unit 2110, configured to receive a first status message, where the first status message indicates that a panel does not work; and
a sending unit 2120, configured to send a first image signal and first indication information to the display based on the first status message. The first image signal is used to display first image information, the first indication information indicates the display to display the first image information in a first display mode, and the first display mode is performing display by using a backlight unit.

Optionally, the apparatus further includes:
a generation unit, configured to generate the first image signal based on the first status message before the sending unit sends the first image signal to the display.

Optionally, the receiving unit 2110 is further configured to receive a second status message, where the second status message indicates that the panel works.

The sending unit 2120 is further configured to send a second image signal and second indication information to the display based on the second status message. The second indication information indicates the display to switch from the first display mode to a second display mode, and the second display mode is displaying a picture by using the backlight unit and the panel.

Optionally, the first status message includes one or more types of information indicating a panel fault, information indicating a driver chip fault of the display, information indicating a connector fault or a line fault of the display, or information indicating that a battery level is lower than or equal to a preset power level.

Optionally, the first status message includes a first user instruction, and the first user instruction indicates to switch to the first display mode.

Optionally, the apparatus 2100 may be an MCU, or the apparatus 2100 may include an MCU and OSD chip.

FIG. 22 is a schematic block diagram of a display system 2200 according to an embodiment of this application. The display system may include a first apparatus 2210 and a second apparatus 2220. For example, the first apparatus 2200 may be the foregoing apparatus 2000, and/or the second apparatus 2220 may be the foregoing apparatus 2100.

An embodiment of this application further provides an apparatus. The apparatus includes a processing unit and a storage unit. The storage unit is configured to store instructions, and the processing unit executes the instructions stored in the storage unit, so that the apparatus is enabled to perform the steps performed in the foregoing embodiments.

Optionally, if the apparatus is located in a vehicle, the processing unit may be the processor 121 shown in FIG. 1, and the storage unit may be the memory 122 shown in FIG. 1. The memory 122 may be a storage unit (for example, a register or a cache) in a chip, or may be a storage unit (for example, a read-only memory or a random access memory) located outside the chip in the vehicle.

An embodiment of this application further provides a display. The display may include the foregoing apparatus 2000.

An embodiment of this application further provides a terminal device. The terminal device may include the foregoing apparatus 2000, or the terminal device may include the foregoing apparatus 2100, or the apparatus may include the foregoing system 2200, or the apparatus may include the foregoing display.

Optionally, the terminal device may be a vehicle.

An embodiment of this application further provides a computer program product. The computer program product includes computer program code, and when the computer program code is run on a computer, the computer is enabled to perform the foregoing methods.

An embodiment of this application further provides a computer-readable medium, and the computer-readable medium stores program code. When the computer program code is run on a computer, the computer is enabled to perform the foregoing methods.

In an implementation process, steps in the foregoing methods can be implemented by using a hardware integrated logical circuit in the processor, or by using instructions in a form of software. The method disclosed with reference to embodiments of this application may be directly performed by a hardware processor, or may be performed by a combination of hardware and software modules in the processor. A software module may be located in a mature storage medium in the art, like a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be understood that in embodiments of this application, the memory may include a read-only memory and a random access memory, and provide instructions and data to the processor.

In embodiments of this application, "first", "second", and various numeric numbers are merely used for distinguishing for ease of description and are not intended to limit the scope of embodiments of this application. For example, "first", "second", and various numeric numbers are used for distinguishing between different pipes, through holes, and the like.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display control method, applied to a display, wherein the display comprises a backlight unit, a panel, and a first control unit, the display has a first display mode and a second display mode, the first display mode is displaying image information by using the backlight unit, the second display mode is displaying the image information by using the backlight unit and the panel, and the method comprises:
receiving, by the first control unit, a first status message, wherein the first status message indicates that the panel does not work;
receiving a first image signal, wherein the first image signal is used to display first image information; and
displaying the first image information in the first display mode based on the first status message.

2. The method according to claim 1, wherein before the receiving a first image signal, the method further comprises:
sending the first status message to a second control unit; and
the receiving a first image signal comprises:
receiving the first image signal generated by the second control unit based on the first status message.

3. The method according to claim 1 or 2, wherein the method further comprises:
receiving, by the first control unit, a second status message, wherein the second status message indicates that the panel works;
receiving a second image signal, wherein the second image signal is used to display second image information; and
switching from the first display mode to the second display mode based on the second status information, and displaying the second image information in the second display mode.

4. The method according to any one of claims 1 to 3, wherein the first status message comprises one or more types of information indicating a panel fault, information indicating a driver chip fault of the display, information indicating a connector fault or a line fault of the display, or information indicating that a battery level is lower than or equal to a preset power level.

5. The method according to any one of claims 1 to 3, wherein the first status message comprises a first user instruction, and the first user instruction indicates to switch to the first display mode.

6. The method according to any one of claims 1 to 5, wherein the first image information comprises one or more types of vehicle speed information, gear information, or steering light information.

7. A display control method, comprising:
receiving a first status message, wherein the first status message indicates that a panel does not work; and
sending a first image signal and first indication information to a display based on the first status message, wherein the first image signal is used to display first image information, the first indication information indicates the display to display the first image information in a first display mode, and the first display mode is performing display by using a backlight unit.

8. The method according to claim 7, wherein before the sending a first image signal to a display, the method further comprises:
generating the first image signal based on the first status message.

9. The method according to claim 7 or 8, wherein the method further comprises:
receiving a second status message, wherein the second status message indicates that the panel works; and
sending a second image signal and second indication information to the display based on the second status message, wherein the second indication information indicates the display to switch from the first display mode to a second display mode, and the second display mode is displaying the image information by using the backlight unit and the panel.

10. The method according to any one of claims 7 to 9, wherein the first status message comprises one or more types of information indicating a panel fault, information indicating a driver chip fault of the display, information indicating a connector fault or a line fault of the display, or information indicating that a battery level is lower than or equal to a preset power level.

11. The method according to any one of claims 7 to 9, wherein the first status message comprises a first user instruction, and the first user instruction indicates to switch to the first display mode.

12. A display control apparatus, wherein a first display mode and a second display mode are implemented by using the apparatus, the first display mode is performing display by using a backlight unit, the second display mode is displaying the image information by using the backlight unit and a panel, and the apparatus comprises:
a receiving unit, configured to receive a first status message, wherein the first status message indicates that the panel does not work, and
the receiving unit is further configured to receive a first image signal, wherein the first image signal is used to display first image information; and
a first control unit, configured to display the first image information in the first display mode based on the first status message.

13. The apparatus according to claim 12, wherein the apparatus further comprises:
a sending unit, configured to send the first status message to a second control unit before the receiving unit receives the first image signal; and
the receiving unit is specifically configured to receive the first image signal generated by the second control unit based on the first status message.

14. The apparatus according to claim 12 or 13, wherein the receiving unit is further configured to receive a second status message, wherein the second status message indicates that the panel works;
the receiving unit is further configured to receive a second image signal, wherein the second image signal is used to display second image information; and
the first control unit is further configured to switch from the first display mode to the second display mode based on the second status information, and display the second image information in the second display mode.

15. The apparatus according to any one of claims 12 to 14, wherein the first status message comprises one or more types of information indicating a panel fault, information indicating a driver chip fault of the display, information indicating a connector fault or a line fault of the display, or information indicating that a battery level is lower than or equal to a preset power level.

16. The apparatus according to any one of claims 12 to 14, wherein the first status message comprises a first user instruction, and the first user instruction indicates to switch to the first display mode.

17. The apparatus according to any one of claims 12 to 16, wherein the first image information comprises one or more types of vehicle speed information, gear information, or steering light information.

18. A display control apparatus, comprising:
a receiving unit, configured to receive a first status message, wherein the first status message indicates that a panel does not work; and
a sending unit, configured to send a first image signal and first indication information to a display based on the first status message, wherein the first image signal is used to display first image information, the first indication information indicates the display to display the first image information in a first display mode, and the first display mode is performing display by using a backlight unit.

19. The apparatus according to claim 18, wherein the apparatus further comprises:
a generation unit, configured to generate the first image signal based on the first status message before the sending unit sends the first image signal to the display.

20. The apparatus according to claim 18 or 19, wherein the receiving unit is further configured to receive a second status message, wherein the second status message indicates that the panel works; and
the sending unit is further configured to send a second image signal and second indication information to the display based on the second status message, wherein the second indication information indicates the display to switch from the first display mode to a second display mode, and the second display mode is displaying the image information by using the backlight unit and the panel.

21. The apparatus according to any one of claims 18 to 20, wherein the first status message comprises one or more types of information indicating a panel fault, information indicating a driver chip fault of the display, information indicating a connector fault or a line fault of the display, or information indicating that a battery level is lower than or equal to a preset power level.

22. The apparatus according to any one of claims 18 to 20, wherein the first status message comprises a first user instruction, and the first user instruction indicates to switch to the first display mode.

23. A display, comprising: a backlight unit, a panel, and a first control unit, wherein
a first display mode and a second display mode are implemented by using the first control unit; and
the first display mode is displaying image information by using the backlight unit, and the second display mode is displaying the image information by using the backlight unit and the panel.

24. A computer-readable storage medium, wherein the computer-readable medium stores program code, and when the program code is run on a computer, the computer is enabled to perform the method according to any one of claims 1 to 11.

25. A terminal device, wherein the terminal device comprises the apparatus according to any one of claims 12 to 22, or the terminal device comprises the display according to claim 23.

26. The terminal device according to claim 25, wherein the terminal device is a vehicle.

27. A chip, wherein the chip comprises a processor and a data interface, and the processor reads, by using the data interface, instructions stored in a memory, to perform the method according to any one of claims 1 to 6.

28. A chip, wherein the chip comprises a processor and a data interface, and the processor reads, by using the data interface, instructions stored in a memory, to perform the method according to any one of claims 7 to 11.
